## Europäisches Patentamt
## European Patent Office
## Office européen des brevets

(19)

(11) Numéro de publication: **0 112 751**
**B1**

(12) ## FASCICULE DE BREVET EUROPÉEN

(45) Date de publication du fascicule du brevet:
**13.01.88**

(51) Int. Cl.⁴: **G 01 P 3/48**

(21) Numéro de dépôt: **83402315.2**

(22) Date de dépôt: **01.12.83**

(54) **Perfectionnements aux montages d'exploitation de signaux électriques fournis par un capteur inductif.**

(30) Priorité: **23.12.82 FR 8221702**

(43) Date de publication de la demande:
**04.07.84 Bulletin 84/27**

(45) Mention de la délivrance du brevet:
**13.01.88 Bulletin 88/2**

(84) Etats contractants désignés:
**AT DE GB IT**

(56) Documents cité:
**DE-A-2 251 967**
**FR-A-2 206 846**
**FR-A-2 438 845**
**US-A-3 701 015**
**US-A-3 832 635**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Bosc, Jean- Jacques, 7, rue Frédéric Chopin Rés. Les Peupliers, F-91380 Chilly- Mazarin (FR)**

(74) Mandataire: **Fabien, Henri, PEUGEOT SA. DAT / BPI 18, rue des Fauvelles, F-92250 La Garenne- Colombes (FR)**

EP 0 112 751 B1

LIBER, STOCKHOLM 1988

## Description

L'invention a pour objet des perfectionnements aux montages d'exploitation des signaux électriques fournis par un capteur inductif, du type par exemple a reluctance variable, capteur donnant des signaux qui ont une amplitude variable, proportionnelle à la vitesse de rotation d'une pièce ou cible portée par un arbre rotatif et notamment le vilebrequin d'un moteur à combustion interne. Cette amplitude peut prendre des valeurs allant de quelques milli-volts à faible régime à quelques centaines de volts à régime élevé du moteur.

Ces grandes variations d'amplitude ne pourraient être éliminées au niveau même du capteur que par l'utilisation d'un outre principe de détection par exemple en faisant appel aux propriétés des magnéto-résistances comme le system décrit dans le document FR-A-2 206 846.

On connaît des montages d'exploitation dans lesquels on traite ces signaux en tension avec un contrôle automatique de gain pour limiter la dynamique (voir par exemple le document FR-A-2 438 845). Dans ces dispositifs, le niveau d'entrée est proportionnel à la fréquence du signal d'entrée, l'impédance présentée au capteur est inversement proportionnelle à la vitesse. Or, pour que la sensibilité de tels montages soit la plus grande possible, il faut que l'impédance d'entrée soit la plus grande possible notamment à faible vitesse, ce qui entraîne une mauvaise immunité aux bruits.

En effet, pour que l'ensemble capteur-montage d'exploitation des signaux présente une bonne immunité aux parasites, il faut soit filtrer au détriment du déphasage, soit fixer une impédance d'entrée relativement faible. Or, la précision de la mesure étant liée au déphasage, il est préférable de fixer une impédance d'entrée relativement faible.

Lorsque le déphasage et la détection de cibles parasites n'ont pas d'inconvénient majeur, on peut comme dans le brevet US-3 832 635 se contenter d'une entrée à houte impédance fixe et d'un filtre éliminant les signaux parasites de fréquence élevée et de faible amplitude.

Il est avantageux pour concilier la grande sensibilité et la faible impédance d'entrée de réaliser un dispositif qui traite le signal en courant. A cet effet le montage d'exploitation selon l'invention comporte des moyens pour faire varier une impédance en fonction de la vitesse et des moyens de traitement et se caractérise en ce que, pour concilier une grande sensibilité et une faible impédance d'entrée, on utilise un étage d'entrée comportant des moyens électroniques traitant le signal en courant et réalisant une caractéristique d'entrée non linéaire par basculement rapide de l'impédance d'entrée d'une première valeur relativement faible à une deuxième valeur plus élevée, l'étage d'entrée délivrant ses signaux aux moyens de traitement.

De préférence, les moyens faisant rapidement basculer l'impédance d'entrée sont constitués de deux transistors montés en base commune appartenant à un dispositif analogue à un pont de Wheatstone comprenant six résistances.

Selon une autre caractéristique d'un mode d'exécution de l'invention, le seuil de basculement est fixé par un générateur de courant délivrant um courant de polarisation auxdits deux transistors.

D'autres caractéristiques d'un exemple de réalisation de l'invention apparaîtront dans la description qui suit en référence aux dessins cijoint dans lesquels:

La figure 1: est un schéma synoptique qui situe l'étage d'entrée conforme à l'invention dans un montage habituel de traitement de signaux,

La figure 2: est un exemple de réalisation d'un étage d'entrée conforme à l'invention,

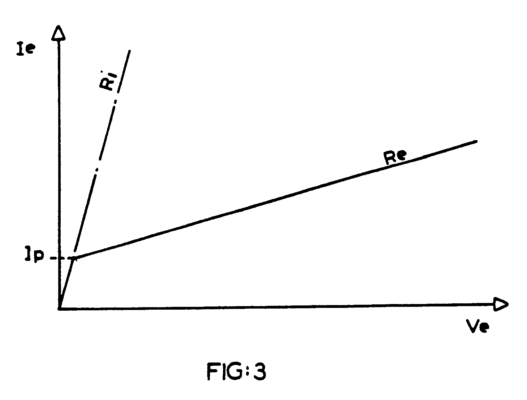

La figure 3: est un diagramme mettant en évidence le basculement de l'impédance d'entrée pour une valeur Ip du courant le délivré par le capteur.

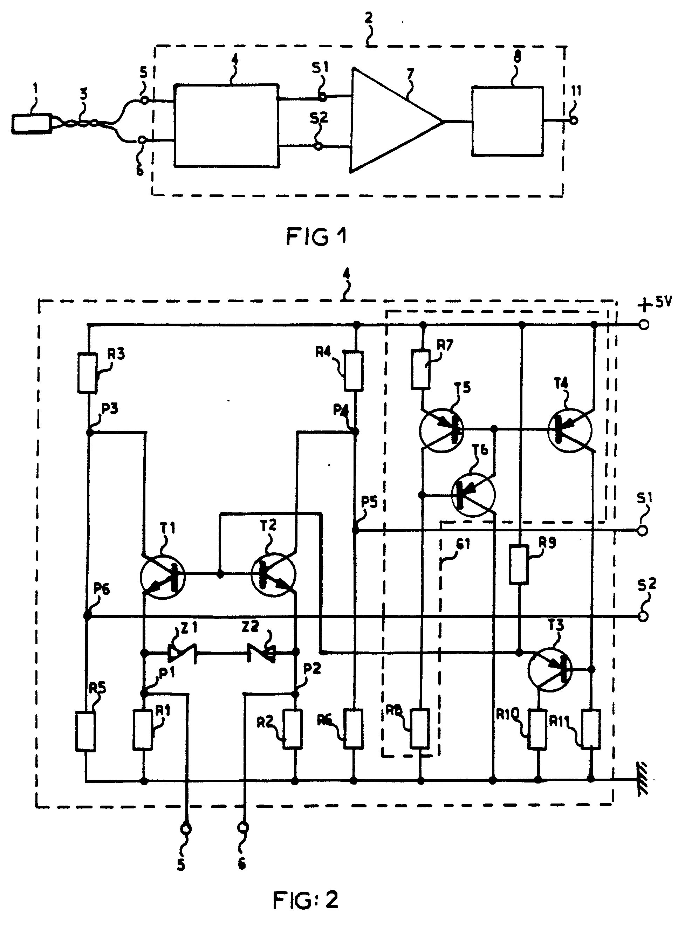

Le schéma synoptique de la figure 1 montre un capteur inductif 1 relié par les lignes 3 aux bornes d'entrées 5, 6 d'un montage d'exploitation de signaux 2. Le montage 2 comporte un étage d'entrée 4 conforme à l'invention. Les signaux qu'il délivre sur ses sorties $S_1$ et $S_2$ sont traités de manière habituelle par un comparateur 7 et un étage de sortie 8.

L'étage d'entrée 4 détaillé figure 2 est composé d'un dispositif analogue à un pont de Wheatstone comprenant deux transistors $T_1$ et $T_2$ montés en base commune, leurs collecteurs étant respectivement reliés d'une part à une ligne +5v via les résistances $R_3$, $R_4$ et d'autre part à une ligne de masse via les résistances $R_5$, $R_6$. Les émetteurs des transistors $T_1$, $T_2$ sont respectivement liés à la masse via les résistances $R_1$, $R_2$ et leurs bases communes sont liées à l'émetteur d'un transistor T3 qui est lié d'autre part à la ligne +5v via la résistance R10. La base de T3 et le collecteur d'un transistor T4 sont liés à la masse par la résistance R11. Les résistances R11, R1 et R2 ont les mêmes valeurs.

Le transistor T4 est associé dans un montage connu aux transistors T5, T6 et aux résistances R7, R8 pour former un générateur de courant de polarisation G1.

L'étage d'entrée 4 est muni en outre de deux entrées 5, 6 liées aux points P1, P2 situés respectivement entre la résistance R1 et l'émetteur de T1 et la resistance R2 et l'émetteur de T2.

Deux diodes de protection de type Zener Z1 et Z2 sont montées en opposition entre les lignes reliant les collecteurs de T1, T2 et les résistances R1, R2.

Le fonctionnement du montage objet de l'invention est le suivant: Le courant de polarisation Ip généré par les transistors T4, T5, T6 polarise le transistor T3. La résistance R1 de même valeur que celle des résistances R2, R1 fixe la polarisation de T1, T2. Les bases de T1, T2 polarisées par l'émetteur de T3 sont donc à basse impédance.

L'ensemble des transistors T1, T2 et des résistances R1, R2, R3, R4, R5, R6, où R5 a la même valeur que R6, valeur sensiblement 10 fois plus grande que celle de R3, fonctionne donc suivant un principe analogue à celui du pont de Wheastone.

On a choisi d'autre part pour la résistance R3 une valeur légèrement plus faible que celle de R4 afin de créer un seuil de détection.

Donc si Ve est la différence de potentiel entre les entrées 6 et 5 et que le capteur délivre un courant Ie, nous aurons pour une alternance donnée dans les circuits émetteurs-collecteurs de T1, T2 respectivement les courants Ip + Ie et Ip-Ie.

Sur les sorties S1 et S2 nous aurons alors un $\Delta$ v proportionnel à Ie, fonction des valeurs des résistances constituant le pont.

L'impédance entre les points 5 et 6 est donc suivant ce montage fonction de la géométrie des transistors T1, T2 et est voisine de $\frac{2h11}{h21}$ (h11 étant la résistance dynamique de la jonction base-émetteur de T1, T2 et h21 leur gain en courant). Le courant traversant R1, R2 est donc soit Ip soit Ip - Ie. Lorsque Ie = Ip, un des deux transistors se bloque (suivant l'alternance) et l'impédance entre 5 et 6 devient Ze = $\frac{h11}{h21}$ + R2, le rapport $\frac{h11}{h21}$ étant petit devant R2, on a sensiblement
Ze = R2.

Le seuil de basculement d'impédance est donc fixé par le générateur G1 de courant Ip, c'est-à-dire l'ensemble des transistors T5, T6, T4.

Puis, lorsque le transistor resté conducteur se sature, Ze va encore augmenter. Ainsi, à titre d'exemple, nous aurons pour Ze une valeur sensiblement égale à 300 Ω lorsque les transistors T1, T2 sont conducteurs; elle atteindra environ 2 K Ω lorsque l'un des transistors est bloqué et l'autre passant, et elle parviendra à 2,6 K Ω lorsque le transistor conducteur se saturera.

Les diodes Zener Z1 et Z2 protègent les jonctions base-émetteur des transistors T1, T2 contre un claquage interne.

## Revendications

1. Montage d'exploitation des signaux électrques fournis par un capteur inductif délivrant des signaux ayant une amplitude variable proportionnelle à la vitesse de rotation d'une cible liée en rotation à un arbre, notamment le vilebrequin d'un moteur à combustion interne, du type comportant des moyens pour faire varier une impédance du montage en fonction de la vitesse et des moyens de traitement (7, 8), caractérisé en ce que, pour concilier une grande sensibilité et une faible impédance d'entrée, on utilise un étage d'entrée (4) comportant des moyens électroniques (4) traitant le signal en courant et réalisant une caractéristique d'entrée non linéaire par basculement rapide de l'impédance d'entrée d'une première valeur relativement faible à une deuxième valeur plus elevée, l'étage d'entrée (4) délivrant ses signaux aux moyens de traitement (7, 8).

2. Montage d'exploitation de signaux selon la revendication 1, caractérisé en ce que les moyens faisant rapidement basculer l'impédance d'entrée sont constitués de deux transistors (T1, T2), montés en base commune appartenant à un dispositif analogue à un pont de Wheatstone comprenant six résistances (R1, R2, R3, R4, R5, R6).

3. Montage d'exploitation des signaux selon la revendication 2, caractérisé en ce que le seuil de basculement est fixé par un générateur de courant (G1) délivrant un courant de polarisation Ip auxdits deux transistors (T1, T2).

4. Montage d'exploitation de signaux selon la revendication 3, caractérisé en ce que le générateur de courant fixant le seuil de basculement est réalisé par un ensemble de trois transistors (T4, T5, T6) associés à deux autres résistances (R7, R8).

5. Montage d'exploitation de signaux selon l'une quelconque des revendications 3 ou 4, caractérisé en ce que la polarisation basse impédance desdits deux transistors (T1, T2) est réalisée par l'émetteur d'un transistor (T3), lui-même polarisé par le générateur de courant (G1).

6. Montage d'exploitation de signaux selon l'une quelconque des revendications 3 à 5, caractérisé en ce que les jonctions base-émetteurs desdits deux transistors (T1, T2) sont protégées contre un claquage interne par deux diodes Zener (Z1, Z2) montées en opposition sur une même ligne entre les collecteurs desdits deux transistors (T1, T2).

## Patentansprüche

1. Schaltung zur Verarbeitung der elektrischen Signale, die durch einen induktiven Aufnehmer geliefert werden, der Signale ausgibt, die eine zur Drehzahl einer in Rotation mit einer Welle, insbesondere der Kurbelwelle einer Brennkraftmaschine, verbundenen Scheibe proportionale, veränderliche Amplitude aufweisen, von der Art, die Mittel zur Veranlassung der Änderung einer Impedanz der Schaltung in Abhängigkeit von der Drehzahl und Verarbeitungsmittel (7, 8) aufweist, dadurch gekennzeichnet, daß zur Gewinnung einer großen Empfindlichkeit und einer niedrigen Eingangsimpedanz eine Eingangsstufe (4) verwendet wird, die elektronische Mittel (4) aufweist, die das Signal im Strom verarbeiten und eine nicht lineare Eingangscharakteristik durch rasches Kippen der Eingangsimpedanz von einem relativ niedrigen ersten Wert zu einem höheren zweiten Wert verwirklichen, wobei die Eingangsstufe (4) ihre Signale an die Verarbeitungsmittel (7, 8) ausgibt.

2. Signalverarbeitungsschaltung nach Anspruch 1, dadurch gekennzeichnet, daß die rasches Kippen der Eingangsimpedanz bewirkenden Mittel durch zwei Transistoren (T1, T2) gebildet sind, die mit zu einer analogen Vorrichtung gehörenden gemeinsamen Basis mit einer sechs Widerstände (R1, R2, R3, R4, R5, R6) aufweisenden Wheatstone-Brücke geschaltet sind.

3. Signalverarbeitungsschaltung nach Anspruch 2, dadurch gekennzeichnet, daß die Kippschwelle durch einen Stromgenerator (G1) festgesetzt ist, der einen Polarisationsstrom Ip an die beiden Transistoren (T1, T2) ausgibt.

4. Signalverarbeitungsschaltung nach Anspruch 3, dadurch gekennzeichnet, daß der die Kippschwelle festsetzende Stromgenerator durch eine Gruppe von zwei anderen Widerständen (R7, R8) zugeordneten drei Transistoren (T4, T5, T6) verwirklicht ist.

5. Signalverarbeitungsschaltung nach einem der Ansprüche 3 oder 4, dadurch gekennzeichnet, daß die Polarisation niedriger Impedanz der beiden Transistoren (T1, T2) durch den Emitter eines Transistors (T3) verwirklicht ist, der selbst durch den Stromgenerator (G1) polarisiert ist.

6. Signalverarbeitungsschaltung nach einem der Ansprüche 3 bis 5, dadurch gekennzeichnet, daß die Basis-Emitter-Verbindungen der beiden Transistoren (T1, T2) gegen inneren Durchbruch durch zwei Zenerdioden (Z1, Z2) geschützt sind, die auf einer gleichen Leitung zwischen den Kollektoren der beiden Transistoren (T1, T2) entgegengesetzt geschaltet sind.

## Claims

Circuit arrangement for processing electrical signals supplied by an inductive detector delivering signals having a variable amplitude proportional to the speed of rotation of a target coupled in rotation to a shaft, in particular the crankshaft of an internal combustion engine, of the kind comprising means for causing an impedance of the circuit arrangement to vary as a function of the speed and processing means (7, 8), characterised in that, in order to reconcile a high sensitivity with a low input impedance, use is made of an input stage (4) comprising electronic means (4) processing the current signal and producing a non-linear input characteristic by rapid switching of the input impedance from a first relatively low value to a second higher value, the input stage (4) delivering its signals to the processing means (7, 8).

2. Circuit arrangement for processing signals according to claim 1, characterised in that the means for causing rapid switching of the input impedance comprise two transistors (T1, T2) connected in a common base configuration belonging to a device analogous to a Wheatstone bridge comprising six resistors (R1, R2, R3, R4, R5, R6).

3. Circuit arrangement for processing signals according to claim 2, characterised in that the switching threshold is determined by a current generator (G1) delivering a biasing current Ip to the said two transistors (T1, T2).

4. Circuit arrangement for processing signals according to claim 3, characterised in that the current generator determining the switching threshold is formed by an arrangement of three transistors (T4, T5, T6) associated with two other resistors (R7, R8).

5. Circuit arrangement for processing signals according to either one of claims 3 or 4, characterised in that the low impedance biasing of the said two transistors (T1, T2) is achieved by the emitter of a transistor (T3), itself biased by the current generator (4).

6. Circuit arrangement for processing signals according to any one of claims 3 to 5, characterised in that the base-emitter junctions of the said two transistors (T1, T2) are protected against internal break-down by two Zener diodes (Z1, Z2) connected in opposition on a same line between the collectors of the said two transistors (T1, T2).

FIG 1

FIG: 2

FIG: 3